Europäisches Patentamt

European Patent Office

Office européen des brevets

(19)

(11) Veröffentlichungsnummer: **0 490 312 A1**

(12) **EUROPÄISCHE PATENTANMELDUNG**

(21) Anmeldenummer: **91121072.2**

(22) Anmeldetag: **09.12.91**

(51) Int. Cl.5: **B23Q 41/00**, G05B 19/405

(30) Priorität: **12.12.90 DE 4039704**

(43) Veröffentlichungstag der Anmeldung:
**17.06.92 Patentblatt 92/25**

(84) Benannte Vertragsstaaten:
**CH DE ES FR IT LI**

(71) Anmelder: **Liebherr-Verzahntechnik GmbH**
**Postfach 1960**
**W-8960 Kempten(DE)**

(72) Erfinder: **Perz, Jürgen**
**Ottenstall 3**
**W-8966 Altusried(DE)**

(74) Vertreter: **Klunker . Schmitt-Nilson . Hirsch**
**Winzererstrasse 106**
**W-8000 München 40(DE)**

(54) **Einrichtung zur Werkstück- und Arbeitsfortschrittserkennung für manuell bzw. automatisch beschickte Werkzeugmaschinen.**

(57) Bei einer Einrichtung zur Werkstück- und Arbeitsfortschrittserkennung für manuell oder automatisch beschickte Werkzeugmaschinen, insbesondere von Verzahnmaschinen mit chaotisch angelieferten Werkstücksorten, erfolgt das Erkennen und Klassieren der Werkstücke mit einer elektronischen Präzisionswaage.

_Fig.1_

Die Erfindung betrifft eine Einrichtung zur Werkstück- und Arbeitsfortschrittserkennung für manuell bzw. automatisch beschickte Werkzeugmaschinen, insbesondere von Verzahnmaschinen mit chaotisch angelieferten Werkstücksorten.

Die Bearbeitung von Werkstücken kann infolge des Einsatzes neuartiger Werkzeuge unter Anwendung neuer Verfahren in immer kürzeren Zeiten erfolgen. Eine gleichzeitige Verkürzung der Nebenzeiten wird somit immer wichtiger. Unter Nebenzeiten sind auch die Umrüstzeiten von besonderer Bedeutung, d. h. die Zeiten, die benötigt werden, um die Werkzeugmaschine von der Bearbeitung einer bestimmten Werkstücksorte auf die Bearbeitung einer anderen Werkstücksorte umzustellen. In modernen Fertigungsanlagen erfolgt der Werkstückantransport, die Übergabe der Werkstücke in die Maschine, die Ausgabe der Werkstücke und der Abtransport in der Regel vollautomatisch. Solange ein und dieselbe Sorte von Werkstücken bearbeitet werden müssen, läßt sich die Automatisierung vergleichsweise einfach bewerkstelligen. Fest programmierte Greifer entnehmen die Werkstücke von einer antransportierten Palette und übergeben sie der Werkzeugmaschine. Nach Beendigung der Bearbeitung erfolgt der umgekehrte Vorgang.

Moderne, rechnergesteuerte Werkzeugmaschinen ermöglichen die Bearbeitung unterschiedlicher Werkstücksorten, ohne daß dazu die Maschine stillgesetzt und umgerüstet werden müßte. Die Auswahl des Werkzeugs ist frei programmierbar und stellt beispielsweise in einem Arbeitsgang eine Geradverzahnung und in einem folgenden Arbeitsgang bei einer nächsten Werkstücksorte eine Schrägverzahnung her. Das Umschalten der Werkzeugmaschine von einem Arbeitsprogramm zu einem anderen erfolgt entweder nach einem vorgegebenen Takt, wenn beispielsweise die Stückzahl der zu bearbeitenden Werkstücksorten feststeht. Wenn jedoch die Werkstücke chaotisch angeliefert werden, d. h. in einer ungeordneten Reihenfolge, muß zunächst das Werkstück erkannt werden und entsprechend der Klassifizierung des Werkstücks das entsprechende Arbeitsprogramm der Werkzeugmaschine für dieses Werkstück aktiviert werden. Das zuverlässige Erkennen und Klassifizieren von Werkstücken, die in chaotischer, d. h. zufälliger Reihenfolge angeliefert werden, stellt ein großes Problem dar. Das Problem ist deswegen besonders gravierend, weil eine falsche Klassifizierung nahezu unausweichlich zu einem Bruch des Werkzeugs und zu einer Beschädigung der Maschine führt.

Zur Lösung dieses Problems sind optische Mustererkennungssysteme bekannt, bei denen die Werkstücke mit einer Videokamera abgetastet und das abgetastete Bild mit bestimmten gespeicherten Mustern verglichen wird. Abgesehen von der Komplexität und der nicht vermeidbaren Fehlerrate liegt der Hauptnachteil derartiger Systeme darin, daß sie den Umwelteinflüssen innerhalb der Maschinenverkleidung auf die Dauer nicht standhalten.

Es wurde auch bereits vorgeschlagen, die zu klassifizierenden Werkstücke mittels eines Laserstrahls abzutasten. Dieses Verfahren eignet sich jedoch nur für einfachste kubische Werkstückgeometrien und leidet im übrigen ebenfalls daran, daß es unter den rauhen Bedingungen innerhalb der Maschinenverkleidung nicht einsetzbar ist.

Schließlich wurden auch Berührungssensoren vorgeschlagen, um die Geometrie eines angelieferten Werkstücks abzutasten. Obwohl derartige Sensoren nicht so empfindlich sind, wie optische Systeme, ist der Steueraufwand hoch und die Fähigkeit unterschiedliche Werkstücke zu erkennen, vergleichsweise gering.

Der Erfindung liegt die Aufgabe zugrunde, einen neuen Weg zur Klassierung von Werkstücken und der Erkennung des Arbeitsfortschrittes anzugeben, der die oben genannten Nachteile nicht aufweist, d. h. die Lösung muß mit der rauhen Umgebung der Werkzeugmaschine kompatibel sein, die Lösung sollte auch eine Klassierung in möglichst viele verschiedene Kategorien erlauben. Der Erkennungs- und Klassifizierschritt als solcher sollte so wenig Zeit wie möglich in Anspruch nehmen, um die Nebenzeiten kurzzuhalten.

Erfindungsgemäß wird diese Aufgabe dadurch gelöst, daß zum Erkennen und Klassieren eine elektronische Präzisionswaage eingesetzt wird. Vorzugsweise wird diese Präzisionswaage taktweise mit Werkstücken beschickt, wobei die Werkstücke, abhängig von einer in eine Steuereinheit einprogrammierte Anzahl von Klassen, klassifiziert und der nachgeschalteten Werkzeugmaschine übergeben werden.

Vorteilhafte Weiterbildungen der Erfindung sind Gegenstand der Unteransprüche.

Der Einsatz einer elektronischen Präzisionswaage löst in überraschender Weise nahezu sämtliche Probleme des Standes der Technik. Der Mechanismus der Waage ist spritzwasser- und staubgeschützt ausgeführt und daher kompatibel mit den Bedingungen innerhalb der Maschinenverkleidung der Werkzeugmaschine. Die Präzisionswaage kann eine hohe Anzahl, bei einem Ausführungsbeispiel bis zu 250 Gewichtstoleranzbereiche feststellen.

Die Identifizierung erfolgt schnell und zuverlässig und ist nicht von einer bestimmten orientierung des Werkstücks abhängig. Damit sind nahezu alle Forderungen, die im Rahmen der Werkstückklassifizierung an ein solches Erkennungssystem gestellt werden, in idealer Weise erfüllt.

Das Sortieren und Klassieren von Gegenständen nach ihrem Gewicht ist an sich bekannt. Insbesondere Lebensmittel, wie Obst, Schlachtvieh, aber auch Stückgut und in Behältern abgefülltes Schüttgut werden während ihres Transportes gewogen und abhängig von ihrem Gewicht zu unterschiedlichen Zielorten transportiert. Eine Reihe bekannter Vorschläge befassen sich beispielsweise mit der Korrektur der dynamischen Meßgrößen (DE-PS 32 06 061).

Die bekannten Sortiereinrichtungen, bei denen der Sortierparameter das Gewicht ist, befassen sich ausnahmslos mit Gegenständen, deren Wert direkt und in erster Linie vom Gewicht abhängt. Es war das Verdienst des Erfinders, als erster erkannt zu haben, daß das genaue Gewicht eines Werkstücks eine präzise Aussage über die Art des Werkstücks und seinen Bearbeitungszustand erlaubt. Eine derartige genaue Gewichtsbestimmung ist nicht dynamisch, sondern nur statisch durchführbar, der taktweisen Arbeitsweise der Einrichtung kommt daher eine wesentliche Bedeutung zu.

Durch die Anwendung der Erfindung können chaotisch angelieferte Werkstücke in kürzestmöglicher Zeit erkannt, klassifiziert und der nachgeschalteten Werkzeugmaschine übergeben werden. Die Zuverlässigkeit des Systems ist beliebig hoch, falsch vorbearbeitete oder fremde Werkstücke werden als solche erkannt.

Nachfolgend wird eine Ausführungsform der Erfindung anhand der beigefügten Zeichnung beispielsweise beschrieben. Darin zeigen

Fig. 1    die schematische Draufsicht auf eine Werkzeugmaschine mit angeschlossenem Transportsystem,

Fig. 2    ein Fließschema der bei der Klassierung ablaufenden Funktionsschritte und

Fig. 3    die Gewichtstoleranzfelder für zwei verschiedene Werkstücke und jeweils vier verschiedene Bearbeitungsstufen.

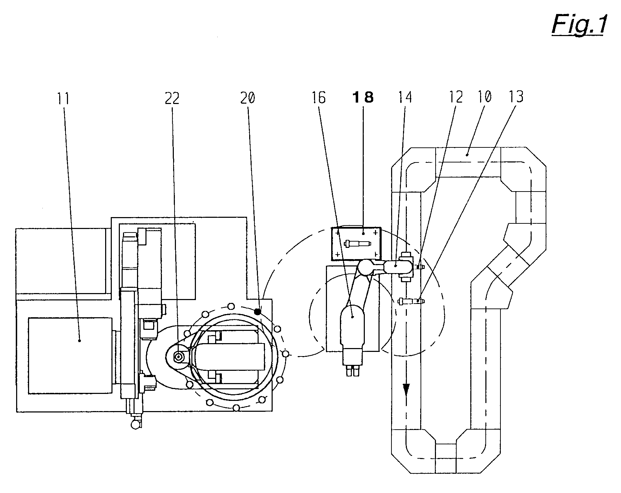

Fig. 1 zeigt in Draufsicht einen Ausschnitt aus einer verketteten Fertigungsstraße, wie sie beispielsweise für die Getriebefertigung in der Kraftfahrzeugindustrie üblich ist. Über die Transportstrecke 10 werden Paletten antransportiert, die mit völlig unterschiedlichen Werkstücken beladen sind. Die Werkstücke können unterschiedliche Zahnräder, aber auch Wellen oder zu bohrende Teile sein. Die Paletten werden im Bereich der Werkzeugmaschine 11 aus der Transportstrecke 10 ausgeleitet und in eine Position 12 verfahren, wo sie vom Greifarm 14 einer Greifvorrichtung 16 voll überstrichen wird. Die Greifvorrichtung ist vorzugsweise als frei programmierbarer Roboter ausgebildet.

Der Greifarm 14 nimmt von der nicht gezeigten Palette in der Position 12 ein Werkstück ab und legt es auf der elektronischen Präzisionswaage 18 ab. Die Waage ermittelt in kürzester Zeit das genaue Gewicht des Werkstücks und ordnet das Werkstück damit einem bestimmten einprogrammierten Gewichtstoleranzfeld zu, das, wie weiter unten noch beschrieben werden wird, eine eindeutige Aussage über die Art des Werkstücks und seinen Bearbeitungszustand erlaubt. Das Ergebnis der Klassifizierung wird an eine Steuereinheit wei-tergegeben, die einen entsprechenden Arbeitsab-lauf in der Werkzeugmaschine aktiviert, d. h. ein für die betreffende Werkstücksorte erforderliches Be-arbeitungsprogramm stellt das Werkzeug Achsposi-tionen, Absenkwege und die im Durchmesser richtige Tasche bereit und der Greifarm 14 übergibt das Werkstück an diese bereitgestellte Tasche. Beim gezeigten Ausführungsbeispiel weist die Werkzeugmaschine ein Karussell auf, das taktweise arbeitet, d. h. das Be- bzw. Entladen findet in der Position 20 während der Zeit statt, in der das Werkstück in der Position 22 bearbeitet wird.

Der Verschwenkbereich des Greifarms 14 ist in Fig. 1 strichpunktiert angedeutet. Ein in der Position 20 ankommendes Werkstück wird vom Greifarm 14 aus der Tasche entnommen, wieder auf der Waage 18 ablegt und danach, abhängig von der Klassifizierung auf der Palette in Position 13 abgelegt.

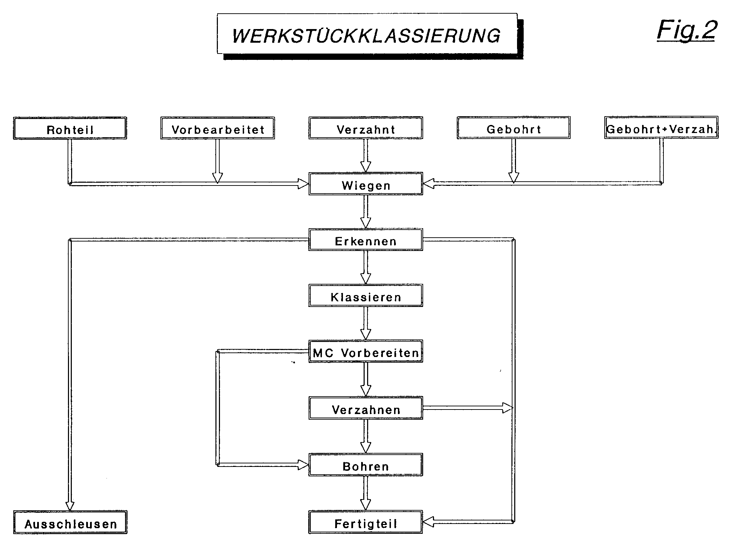

In Fig. 2 ist das Fließschema der Werkstück-klassierung nochmals zusammenfassend darge-stellt. Klassifiziert werden können Rohteile, vorbearbeitete Rohteile, verzahnte Werkstücke, gebohrte Werkstücke oder auch gebohrte und verzahnte Werkstücke. Das Gewicht der Werkstücke wird beispielsweise auf 0,1 g genau festgestellt, so daß Verzahnungsfehler, wie beispielsweise durch ein beschädigtes Werkzeug ohne weiteres festgestellt werden können. Auch passiert es häufiger, daß bei gebohrten Werkstücken eine abgebrochene Bohrerspitze im Werkstück steckengeblieben ist. Derartige Fehlstücke werden problemlos erkannt. Nach dem Wiegen, Erkennen und Klassieren wird das Werkstück der Werkzeugmaschine übergeben und dort verzahnt und/oder gebohrt. Das Fertigteil wird anschließend aus der Maschine entnommen und gegebenenfalls nochmals auf der Waage abgelegt, um den korrekten Ablauf der Fertigung zu überprüfen. Eine abgebrochene Bohrerspitze würde beispielsweise auch hier zu einer Aussteuerung führen.

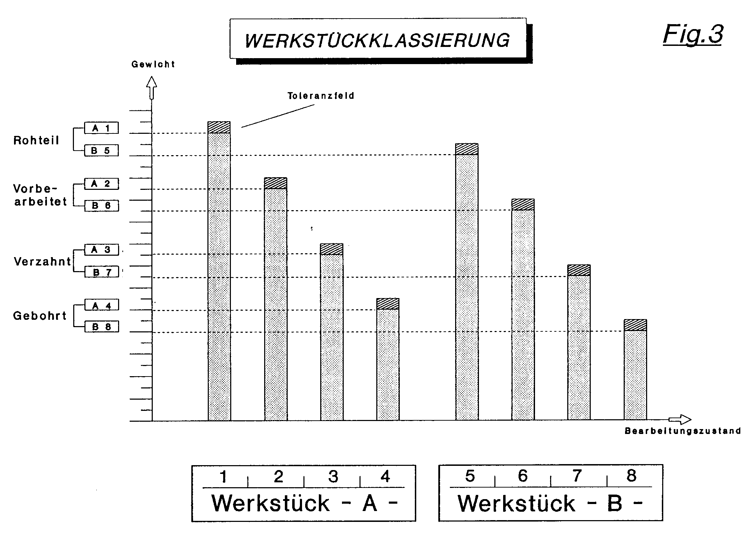

In Fig. 3 ist ein Schema der Anordnung ver-schiedener Gewichtstoleranzfelder für zwei Werk-stücke und verschiedene Bearbeitungsstufen dar-gestellt. Es handelt sich um die Werkstücksorte A und die Werkstücksorte B, die jeweils unterschiedliche Rohteilgewichte aufweisen, sowie in jeder Fertigungsstufe ebenfalls ein unterschiedliches Gewicht haben. Das Schema ist vergleichsweise einfach, auf der Ordinate sind die jeweiligen Gewichtstoleranzfelder aufgetragen, wogegen auf der Abszisse für die Werkstücke A und B jeweils die unterschiedlichen Fertigungsstufen, d. h. Rohteil, vorbearbeitetes Teil, verzahntes Teil und gebohrtes Teil (Klassen 1 bis 4) aufgetragen sind. Entscheidend ist, daß sich die Gewichtstoleranzfelder nicht überlappen und möglichst auch nicht unmittelbar aneinander angrenzen. Nur auf diese Weise kann eine eindeutige und zuverlässige Klassierung erreicht werden.

In einer Ausführungsform wurde eine im Handel erhältliche Präzisionswaage eingesetzt, die einen Wägebereich bis 6,8 kg und eine Ablesegenauigkeit von 0,1 g hat. Die Waage ist staub- und strahlwassergeschützt und daher hervorragend für den beabsichtigten Einsatzort geeignet. Auf der Waage befindet sich vorzugsweise eine Ablage, die die auf der Waage abgelegten Werkstücke fixiert. Die Einschwingzeit einer solchen Waage beträgt maximal zwei Sekunden. Die genannten Daten sind lediglich als Beispiel aufzufassen.

Die Einrichtung kann selbstverständlich auch in anderem Zusammenhang, als den beschriebenen eingesetzt werden, beispielsweise zur Arbeitsfortschrittserkennung gleicher Werkstücke oder bei der Qualitätskontrolle.

## Patentansprüche

1. Einrichtung zur Werkstück- und Arbeitsfortschrittserkennung für manuell oder automatisch beschickte Werkzeugmaschinen, insbesondere von Verzahnmaschinen mit chaotisch angelieferten Werkstücksorten,
dadurch **gekennzeichnet,**
daß das Erkennen und Klassieren der Werkstücke mit einer elektronischen Präzisionswaage erfolgt.

2. Einrichtung nach Anspruch 1,
dadurch **gekennzeichnet,**
daß die Präzisionswaage taktweise mit Werkstücken beschickt wird.

3. Einrichtung nach Anspruch 2,
**gekennzeichnet** durch
eine elektronische Steuereinheit, in der für jede Werkstücksorte ein Gewichtstoleranzfeld für das Rohteil und gegebenenfalls jeweils eines für den Arbeitsfortschritt definiert wird, wobei sich keines der Toleranzfelder unmittelbar aneinander anschließt.

4. Einrichtung nach Anspruch 2,
dadurch **gekennzeichnet,**
daß die Steuereinheit, abhängig vom Gewicht des Werkstücks bzw. seiner Klassifizierung eine Greifvorrichtung (16) aktiviert, die dieses Werkstück an eine für diese Werkstücksorte vorgesehene Tasche der nachgeschalteten Werkzeugmaschine (11) übergibt.

5. Einrichtung nach einem der Ansprüche 1 bis 4,
dadurch **gekennzeichnet,**
daß die Steuereinheit, abhängig vom Gewicht des fertig bearbeiteten Werkstücks bzw. seiner Klassifizierung die Greifvorrichtung (16) aktiviert, die das Werkstück an einen für diese Werkstücksorte vorgesehenen Platz auf Palette ablegt.

6. Einrichtung nach einem der Ansprüche 1 bis 5,
dadurch **gekennzeichnet,**
daß die Greifvorrichtung (16) ein frei programmierbarer Roboter ist.

7. Einrichtung nach einem der Ansprüche 1 bis 6,
dadurch **gekennzeichnet,**
daß die Steuereinheit bzw. die Greifvorrichtung ein Werkstück, das nicht in eines oder nicht in das richtige der definierten Gewichtstoleranzfelder fällt, nicht an die nachgeschaltete Werkzeugmaschine übergibt.

8. Einrichtung nach einem der Ansprüche 1 bis 7,
dadurch **gekennzeichnet,**
daß die elektronische Präzisionswaage Datenaus- und Eingänge und eine separate Anzeigeeinheit hat.

9. Einrichtung nach Anspruch 8,
dadurch **gekennzeichnet,**
daß der Wiegebereich der elektronischen Präzisionswaage so groß ist, daß bis zu 250 Gewichtsklassen vorgebbar sind.

Fig.1

_Fig.2_

WERKSTÜCKKLASSIERUNG

Rohteil

Vorbearbeitet

Verzahnt

Gebohrt

Gebohrt+Verzah.

Wiegen

Erkennen

Klassieren

MC Vorbereiten

Verzahnen

Bohren

Fertigteil

Ausschleusen

Fig.3

Europäisches
Patentamt

# EUROPÄISCHER RECHERCHENBERICHT

Nummer der Anmeldung

EP    91 12 1072

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>Y | JP-A-61 190 606 (MITSUBISHI)<br><br>* Abbildung 2 *<br>--- | 1,2<br>4-6 | B23Q41/00<br>G05B19/405 |
| Y<br>A | DE-A-2 053 371 (HOMBERGER)<br><br>* Seite 3, Absatz 2 - Seite 4, Absatz 1 *<br>--- | 4,6<br>7 | |
| Y | DD-A-258 332 (CURIE)<br>* Anspruch 1 *<br>--- | 5 | |
| A | SU-A-721 154 (IZHEV)<br>* Abbildung 1 *<br>--- | 1-3,5 | |
| A | GB-A-2 180 497 (MILANI)<br>* Anspruch 1 *<br>--- | 1-3,5 | |
| A | SU-A-1 500 465 (ODESS)<br>* Abbildung 2 *<br>--- | 1 | |
| A | EP-A-0 364 937 (KAUFMANN)<br>* Anspruch 1 *<br>--- | 5 | **RECHERCHIERTE SACHGEBIETE (Int. Cl.5 )** |
| A | DE-A-2 025 460 (MATSUSHITA)<br>* Seite 33, Absatz 3 *<br><br>----- | 8 | B23Q<br>G05B |

Der vorliegende Recherchenbericht wurde für alle Patentansprüche erstellt

| Recherchenort | Abschlußdatum der Recherche | Prüfer |
|---|---|---|
| DEN HAAG | 19 MAERZ 1992 | DE GUSSEM J. L. |

EPO FORM 1503 03.82 (P0403)